# EUROPEAN PATENT SPECIFICATION

(11) **EP 4 406 898 B1**
(45) Date of publication and mention of the grant of the patent: **30.07.2025**
(21) Application number: 23153841.4
(22) Date of filing: 30.01.2023
(51) Int. Cl.: B66B 9/08

(54) **METHOD TO DETERMINE A SPEED PROFILE FOR A STAIRLIFT ON THE BASIS OF A SPECIFIC MASS MOMENT OF INERTIA OF A USER OF THIS STAIRLIFT**
VERFAHREN ZUR BESTIMMUNG EINES GESCHWINDIGKEITSPROFILS FÜR EINEN TREPPENAUFZUG BASIEREND AUF EINEM BESTIMMTEN MASSENTRÄGHEITSMOMENT EINES BENUTZERS DIESES TREPPENAUFZUGS
PROCÉDÉ POUR DÉTERMINER UN PROFIL DE VITESSE POUR UN MONTE-ESCALIER SUR LA BASE D'UN MOMENT D'INERTIE DE MASSE SPÉCIFIQUE D'UN UTILISATEUR DUDIT MONTE-ESCALIERS

(43) Date of publication of application: 31.07.2024
(73) Proprietor: TK Home Solutions B.V., 2921 LN Krimpen aan den IJssel (NL)
(72) Inventor: Boxum, Cornelis, 2645 GV Delfgauw (NL)
(74) Representative: Michalski Hüttermann & Partner Patentanwälte mbB

(56) References cited:
- WO-A2-2005/087644
- WO-A2-2020/079395

## Description

### Field of the invention

The present disclosure generally relates to a method to determine a speed profile for a stairlift for transporting a person along a staircase, wherein the stair case comprises guide means extending along the staircase, a carriage being moveable along the guide means and configured to carry a person, and user interaction means for operating the stairlift, and wherein the carriage is rotatable around a vertical axle by a first drive. The present disclosure further relates to such a stairlift.

### Background of the invention

Stairlifts are known from the state of the art. With such, persons unable to use a staircase, e.g. due to disability or certain conditions, are transported along the staircase between a lower and an upper landing position and/or intermediate landing positions, while the staircase is still fully usable for other persons in its usual sense. Such stairlifts have guide means like a rail or the like, on which the carriage is moved, e.g. by a drive unit connected to the guide means, wherein the drive unit may comprise further components of the stairlift. A carriage for a stairlift usually is a chair, which allows for safe rest of arms and feet, may be foldable to allow other use of the staircase and most preferred takes a certain boarding position at the landing positions. Stairlifts are mostly retrofitted with already existing staircases.

With such stairlifts, a need exists to get from one landing position to another in a fast manner but at the same time save and at good comfort. However, comfort and safety may be reduced above a certain speed, in particular when the guide means turn around a vertical or horizontal axle and/or when the carriage is rotated around the vertical axle, e.g. to avoid confrontation with steps of the staircase or to avoid contact with a wall of a stairwell as described in WO 2005/087644. In such situations, movements/rotation of the carriage in different directions overlay with each other.

While the comfort is mostly an individual aspect and tolerable speed may therefore differ from user to user, safety aspects may be specified in laws or regulations and therefore set a limit to traveling speed of the carriage. Further, traveling speed may be limited by the performance of drives of the stairlift, depending on the body weight and body form of a user.

In the state of the art, speed profiles are determined by so called rail-data, determining a rotational position and a speed for the carriage at a certain position of the guide means, while leveling of the carriage is performed stand-alone by a leveling mechanism.

However, such rail-data does not lead to an optimal speed profile for fast traveling/short travel time and good comfort at the same time and further must often be (re)defined by a technician during installation of the stairlift, which is time consuming.

WO 2020/079395 A2 discloses a stairlift and a method of operating said stairlift. The stairlift includes a stairlift rail, a carriage, a chair pivotally mounted on the carriage, at least one motion sensor and a control system. The control system is operable to store a record of an undesirable movement of the chair. The control system is also operable, during a subsequent traversal of the rail by the carriage, to apply a remedy to attempt to prevent a reoccurrence of the undesirable movement of the chair at the position indicated in the record.

The control system is further operable to determine whether the undesirable movement of the chair reoccured. The stairlift can be provided with a weight sensor weighing the individual sitting on the chair in order to change chair dynamics by establishing a particular individual record stored in the control system. On the basis of this particular individual record, the speed profile is adapted.

### Description of the invention

Based on the state of art described above, it is an object of the invention to provide fast, comfortable and save travel by a stairlift.

This object is solved by the features of the independent claims. Advantageous embodiments are indicated in the dependent claims. Where technically possible, the features of the dependent claims may be combined as desired with the features of the independent claims and/or other dependent claims.

In particular, the object is solved by a method to determine a speed profile for a stairlift for transporting a person along a staircase according to independent claim 1.

Insofar as elements are designated with the aid of numbering, for example "first element", "second element" and "third element", this numbering is provided purely for differentiation in the designation and does not represent any dependence of the elements on one another or any mandatory sequence of the elements. In particular, this means that, for example, a device or method need not have a "first element" in order to have a "second element". Also, the device or method may have a "first element", as well as a "third element", but without necessarily having a "second element". There may also be multiple units of an element of a single numbering, for example multiple "first elements".

Guide means may for example be rails, tracks or the like and may be integrated or retrofitted to the staircase, e.g. at steps of the staircase, e.g. standing on the tread of a number of steps, at a balustrade of the staircase or a wall next to the staircase. They comprise at least one such rail or track or at least two rails or tracks running next to each other. The guide means preferably run parallel to the slope of the staircase and extend horizontally or vertically into landing positions at the lower end, the upper end, or an intermediate position of the staircase.

A carriage preferably comprises a drive unit which is connected to and guided by the guide means and on which the chair or platform is mounted in a pivotable manner to allow leveling in an upright position when the orientation of the guide means vary. The carriage may further comprise a chair, wherein the chair may comprise arm rests, footrests, and a chair belt to provide for safe accommodation of the transported person. In a landing position, the chair may turn away from the stairs to allow for pleasant boarding from a floor level. Such turn may be implemented by a trajectory of the guide means or may be implemented by the first drive by rotation the carriage around the vertical axle. A carriage may further/alternatively to the chair comprise a platform to carry a wheelchair, wherein the platform may comprise balustrades, at least one door in the balustrades and retention means like belts, hooks, bars and the like. Preferably, in the landing position the platform is leveled with a floor. A second drive for moving the carriage along the rail, e.g. an electric motor, in particular a brushed or brushless DC motor, a stepper motor or a servo motor, may be housed in a drive unit or may be of separate configuration from the carriage while being connected to the carriage with traction means or due to means integrated in the guide means.

User interaction means may comprise a joystick, a rotatable knob, a touchpad, a touchscreen, one or more button/s, a remote control or the like and may further comprise means located at the carriage, e.g. at an arm rest or at a balustrade of a platform, and means located in at least one landing position, e.g. at a wall or at a balustrade of the staircase, such as a remote control. The user interaction means may have an active state and inactive state, which may be associated to certain positions of the interaction means.

The carriage is rotatable around the vertical axle relative to the guide means. E.g. the carriage comprises a drive unit connected to the guide means, wherein the orientation of the drive unit against the guide means is fixed and wherein the chair or the platform is rotatable against the drive unit. The first drive may then be housed in the drive unit. The invention also refers to systems, wherein the entire carriage is rotatable against the guide means in any form. The first drive may be an electric motor, in particular a brushed or brushless DC motor, a servo motor or a stepper motor.

The optimal torque may be set according to the specific mass moment of inertia to reach a certain rotational acceleration with the specific person carried on the carriage. This acceleration may be defined due to comfort conditions or according to a specific movement situation of the carriage, e.g. at a straight part of the guide means or in a turn of the guide means. Most preferred, the optimal torque is defined as the maximum torque, which can be applied according to comfort conditions and/or drive power. Translational speed along the guide means may be limited by comfort, safety conditions, available performance of the first drive and/or by regulations. For example, optimal torque may be defined due to comfort conditions for a light person while for a heavy person, optimal torque is defined by the maximum performance of the first drive.

A speed profile defines the movement of the carriage along the trajectory of the guide means, wherein the movement refers to the speed/position in any (rotational) direction, in particular translational speed along the guide means (e.g. by the second drive), rotational speed or rotational position around a vertical axle (e.g. by the first drive) and/or rotational speed or rotational position around a horizontal axle (e.g. by a leveling mechanism). Accordingly, the time and/or position, where a specific movement of the carriage is started or stopped and a gradient of acceleration or deceleration are defined in the speed profile, in particular for the movement of the carriage along the guide means and for the rotational movement by the first drive. As an example, the speed profile defines that a rotation of the carriage is started a specific distance before a turn is coming up in the trajectory of the guide means or before a specific position of the staircase is reached, and further defines, which torque is applied, which angle the rotation has to reach, which rotational speed may be applied at the most and/or at which speed the carriage moves along the guide means during rotation around the vertical axle. By activating the user interaction means, the carriage is moved along the guide means according to the speed profile.

Within the description and the claims, the terms "person" and "user" are used interchangeable and describe a person interacting with the stairlift in some way. The specific terms are used as best fit in a particular context, wherein "person" mostly refers to the transportation as such and the "user" mostly refers to a/the person interacting with the stairlift during operation.

According to the technical teaching of the present invention, the specific mass moment of inertia differs for different persons carried on the carriage. This is due to the different weight of different persons and also due to the different body forms of different persons, defining how the body weight is positioned relative to the vertical axle. Further impact is taken by a (adjustable) height position of the chair/platform over the drive unit and possible offset of the chair/platform/user position over the vertical axle. Thus, a first drive applying a fixed torque value to the carriage may lead to uncomfortable fast rotation for a person with a low specific mass moment of inertia (e.g. a very light person) and time inefficient slow rotation for a person with a high specific mass moment of inertia (e.g. a very heavy person). By determining the specific mass moment of inertia, the optimal torque applied can be chosen for good comfort and low travelling time for any specific person by setting up the speed profile accordingly. In particular, the optimal torque may be chosen according to what the specific person regards to still be comfortable, e.g. by inputting such information in the method during setting the optimal torque. Vice versa, the speed profile can be set up to be optimized for a fast traveling speed at good comfort and safety conditions with the specific mass moment of inertia, e.g. a specific distance before a turn of the guide means may be defined accordingly to reach a desired rotational angle before the turn of the guide means without reducing the speed of the carriage along the guide means.

According to one aspect, the specific mass moment of inertia for a specific person is determined by calculating a correlation between applied torque and resulting rotational acceleration for the first drive with the specific person carried on the carriage. From this, a value can be calculated directly and precisely, as the mass moment of inertia directly corresponds to said correlation. According to another alternative aspect, the specific mass moment of inertia for a specific person is determined by measuring the specific persons weight while the specific person is carried on the carriage. This aspect does not considers the body form of a person but may result in reasonable assumptions for the specific mass moment of inertia by assuming standard body forms and may be simple to implement, e.g. when a weight sensor is already integrated in a stairlift.

In one embodiment of the method, the correlation between applied torque and resulting rotational acceleration is calculated in a test rotation for determining the specific mass moment of inertia. In such test rotation, a defined torque may be applied to the carriage by the first drive and the resulting rotational acceleration or a resulting rotational speed is measured. Alternatively, a defined rotational speed may be set and the torque applied and/or the time to reach the defined rotational speed is measured. Several runs of the test rotation may be conducted, wherein the person carried on the carriage may take (slightly) different positions in/on the carriage, wherein the specific mass moment of inertia is derived as an average value of measured values over the several runs of the test rotation.

In one embodiment, the test rotation is conducted once during installation of the stairlift.

This is, the specific mass moment of inertia for a specific person is set once and assumed to not change. The set specific mass moment of inertia may be reset by another test rotation during maintenance in order to be adapted e.g. according to loss or increase of weight of the specific person. Advantageously, the test rotation may then be assisted by a technician or service employee and regular use of the stairlift can be conducted without any further measures regarding the determination of the specific mass moment of inertia. The test rotation may be conducted for more than one specific person, wherein the specific mass moment of inertia or a specifically determined speed profile is then associated to different user profiles.

Alternatively, the test rotation is conducted before a ride, in particular before every ride of the stairlift. This is, the test rotation may be implemented in the regular use of the stairlift, e.g. by rotating the carriage from a landing position into a start position at the beginning of a ride. Advantageously, the specific mass moment of inertia is then set to an actual weight / body form / position of the specific person at the time of use and the method considers the fact, that body weight and body form may change in relatively short time. Further, by conducting the test rotation at the beginning of the ride, the method is conducted for the specific person actually being carried on/in the carriage and is therefore set properly for any person using the stairlift, no matter if the person has a user profile or uses the stairlift regularly.

Preferably, the test rotation is conducted in a landing position of the carriage. In a landing position, movement for test rotation can be conducted independent from the positioning of the carriage relative to the steps of the staircase. Thus, test rotation can be implemented in the movement of the stairlift easily at the landing position. Further, when the carriage is turned away from the staircase in a landing position for reaching at a comfortable boarding position, this turn can be conducted by the first drive and can include the test rotation.

In a preferred embodiment, the speed profile is determined applying at the most an optimal rotational speed for the first drive. Likewise the optimal torque, optimal rotational speed may be chosen for optimizing the speed profile regarding reduced travel time and for providing sufficient comfort, in particular regrading individual comfort preferences of the specific person.

In a preferred embodiment, the speed profile is determined with information on a trajectory of the guide means. E.g., information about the incline and/or any turns of the guide means and/or distance between the guide means and steps or walls are included to determine any speeds along the rail. For example, when a turn is coming up along the trajectory at a certain position of the guide means and the turn requires the carriage to be rotated around the vertical axle, the information comprises the position of the turn and the angle of rotation required. The speed profile can then be set to start the rotation early enough to reach the required angle of rotation at the position of the turn by applying at the most the optimal torque and/or optimal rotational speed and without reducing the translational speed of the carriage along the guide means, e.g. below a value given by a regulation, before the turn. In one embodiment, the trajectory comprises at least one change of direction around a vertical axle and/or at least one change of direction around a horizontal axle. The turn around the vertical axle of the guide means may or may not necessitate a rotation of the carriage around the vertical axle while the turn around the horizontal axle of the guide means might necessitate a rotation of the carriage by the leveling mechanism.

In a further embodiment, the speed profile is determined with information on a necessary angle of rotation around the vertical axle at at least one position of the carriage along the guide means. E.g., the carriage needs to be positioned in a certain rotational angle at a specific step of a spiral staircase, to fit in a narrow stairwell along the extension of the stairwell, or to take a narrow turn of the guide means without collision with a wall. Advantageously, with this information, the speed profile can be set up for the carriage to reach the rotational angle at the distinguished position of the guide means in the fastest, yet still comfortable manner. The information on a necessary angle of rotation may or may not be associated with information on the trajectory of the guide means.

Preferably, a necessary angle of rotation is set by rotating the carriage manually for at least one position of the carriage along the guide means, in particular during a test run of the carriage along the guide means. Thus, the stairlift is configured to allow manual rotation of the carriage around the vertical axle at least during the test run, e.g. by decoupling the first drive from the carriage, while the rotational angle of the carriage is still monitored or registered in some way. The carriage may then be moved along the guide means by hand or by the second drive at a slow speed and may be positioned in the necessary angles at certain positions. While being positioned in a certain position and/or rotational angle, the stairlift may register the position/rotational angle and set/determine values for the speed profile accordingly.

In a preferred embodiment, which was already referenced in the preceding description, the stairlift comprises a leveling mechanism for keeping the carriage in a horizontal orientation, wherein the speed profile is determined with information on an angle of the leveling mechanism at at least one position of the carriage along the guide means. The leveling mechanism may be configured to keep the carriage leveled in a stand-alone manner, e.g. as a closed control circuit, or the angle of the leveling mechanism may be determined by the speed profile, wherein for example the position, rotational speed or rotational acceleration of a third drive driving the leveling mechanism is determined by the speed profile. The information on the angle of the leveling mechanism may be set / tracked for at least one position of the carriage along the guide means during a test run of the carriage along the guide means, wherein the carriage is kept leveled e.g. by the stand-alone leveling mechanism or by any other means, e.g. manually, during the test run.

In a preferred embodiment, which was generally referenced in the preceding description, the speed profile is optimized for shortest travel time. This is, the translational speed of the carriage along the guide means is preferably kept at the highest level to be considered comfortable by a person using the stairlift and to be allowed by regulations, while rotation of the carriage around the vertical axle is configured to avoid slowing of the translational movement. Further, the movement around turns of the guide means, either turns around a vertical axle or turns around a horizontal axle, may be configured to be conducted at optimal translational speed, e.g. by implementing counter movements with the first drive or the leveling mechanism allowing a high translational speed.

The object is further solved by a stairlift for transporting a person along a staircase according to independent claim 14. definition of the stairlift are to be understood in the same manner they are described before regarding the method. The first drive may be a brushed or brushless DC motor, a servo motor or a stepper motor, which is capable of tracking its rotational position and reporting it to a control system. With the stairlift, the predescribed method is implemented to reach the advantages described in reference to the method accordingly.

According to the invention, the stairlift comprises a control unit, which the predescribed method is implemented with.

In a preferred embodiment of the stairlift, it further comprises a leveling mechanism for keeping the carriage in a horizontal orientation along the guide means. The leveling mechanism may be configured to keep the carriage leveled in a stand-alone manner, e.g. as a closed control circuit, or the angle of the leveling mechanism may be determined by the speed profile, wherein for example the position, rotational speed or rotational acceleration of a third drive driving the leveling mechanism is determined by the speed profile.

### Brief description of the figures

In the following, the invention is explained in more detail with reference to the accompanying figures using preferred examples of embodiments. The formulation figure is abbreviated in the drawings as Fig.
- Fig. 1: is a view of a stairlift according to an aspect of the invention;
- Fig. 2: shows a top plan view of a stairwell;
- Fig. 3: is a method diagram of a method according to the invention; and
- Fig. 4: is a diagram of an exemplary speed profile.

### Detailed description of the embodiments

The described embodiments are merely examples that can be modified and/or supplemented in a variety of ways within the scope of the claims. Any feature described for a particular embodiment example may be used independently or in combination with other features in any other embodiment example. Any feature described for an embodiment example of a particular claim category may also be used in a corresponding manner in an embodiment example of another claim category.

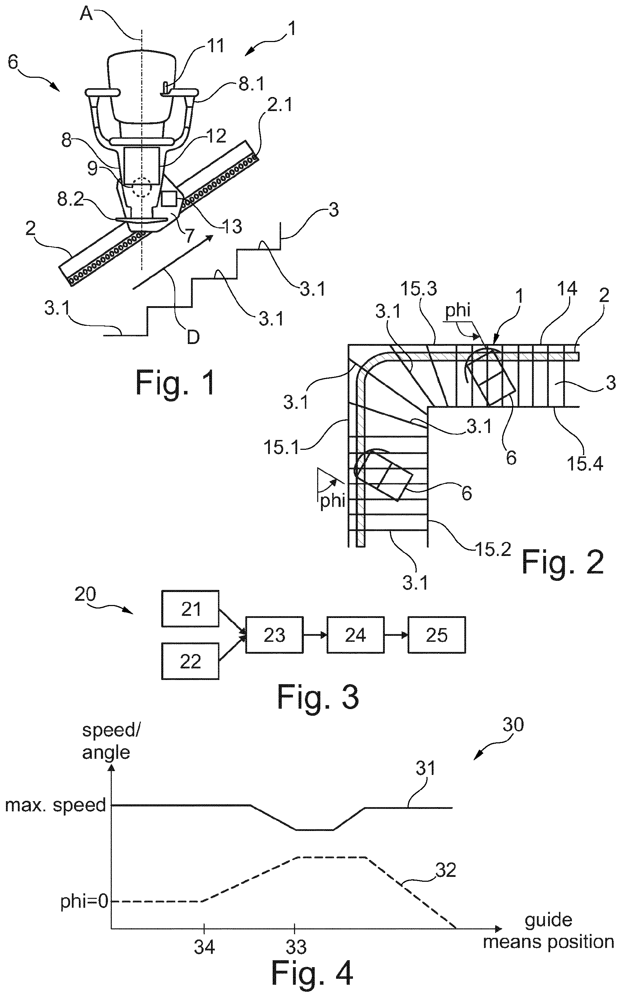

Figure 1 shows a stairlift 1, to which the invention can be applied. The stairlift 1 comprises guide means 2 formed as a rail and running parallel to the slope of a staircase 3 in a direction D, wherein the staircase 3 has a number of steps 3.1. The stairlift 1 further comprises a carriage 6, which can move along the guide means 2 in or against the direction D, and which comprises a drive unit 7 and a chair 8, wherein the chair 8 is connected to the drive unit 7 in a pivotable manner by a leveling mechanism 9. For driving the carriage 6, positive engagements means 2.1 are provided on the guide means 2, which cooperate with a second drive (not shown) for driving the carriage 6 along the guide means 2 in a translational movement, in particular a driven pinion, of the drive unit 7.

The chair 8 comprises arm rests 8.1 and a footrest 8.2 and user interaction means 11 in the form of a joystick. By pushing/pulling the user interaction means 11 to a corresponding side, the carriage 6 may be driven to the according side in the direction D. The user interaction means 11 are pictured in an upright position which is associated to an active state, while they might be folded, e.g. into a recess at the arm rest 8.1, to get deactivated and avoid unintended actuation.

The carriage 6 further comprises a first drive 12 which is shown schematically and with which the carriage 6, in particular the chair 8 is rotatable around a vertical axle A. The first drive 12 may be a brushed or brushless DC motor, a servo motor or a stepper motor. With a rotational angle phi set by the first drive 12, the carriage 6 can be positioned to avoid collision with steps 3.1, or walls, to (pre)position for translational movement of the carriage 6 through a turn of the guide means 2 at highest possible translational speed or to provide a comfortable and safe boarding position in a landing position of the carriage 6. Accordingly, the guide means 2 can have a curved shape, which deviates from a straight line. The direction of travel D and/or the inclination of the guide means 2 may change at least once during the course of the guide means 2 and the guide means 2 may run out horizontally at a landing position, wherein the chair 8 is hold in an upright position due to the leveling mechanism 9. Thus, the guide means 2 follow a certain trajectory having turns around horizontal and/or vertical axles or both axles at the same time.

The carriage 6, in particular the drive unit 7, may comprise a control unit 13, which is connected to the first drive 12 and with which a torque applied by the first drive 12 to the carriage 6 can be determined. Further, the carriage 6, in particular the control unit 13, may comprise means to measure the angle of rotation phi of the first drive 12, the torque applied by the first drive 12 and/or the rotational speed of the first drive 12. The carriage 6 may further comprise a weight sensor (not shown) to measure the mass of the chair 8 and/or a person carried on the chair 8.

Fig. 2 shows a top plan view of a stairwell 14, with a stairlift 1 therein. The stairwell 14 has walls 15.1, 15.2, 15.3, 15.4 , and steps 3.1. Carriage 6 is drawn at two positions along guide means 2, where it makes an angle phi relative to guide means 2. The staircase 3 makes a turn of 90 degrees. In the turn, steps 3.1 narrow in the direction of the center of the turn. When carriage 6 is moved along the guide means 2, the carriage 6 needs to be prevented from hitting the walls 15.1, 15.2, 15.3, 15.4 of the stairwell 14 or the steps 3.1. Whether there is a risk of this happening depends on inter alia the width of the stairwell 14 and the height of guide means 2 above the steps 3.1. Even when guide means 2 are mounted so high above the steps 3.1 that there is no risk of collision with steps 3.1 on the straight parts of the staircase 3, there may, for instance, be a local risk of collision in the turn due to the narrowing of steps 3.1. The risk of collisions with steps 3.1 in the turn is avoided by rotating the carriage 6 locally in the turn relative to the guide means 2 around the vertical axle A in order to avoid collision with steps 3.1. The speed values and angle values describing the movement of the carriage 6 are defined in a speed profile, which defines at least the translational speed/acceleration of the carriage 6 along the guide means 2 and the rotational speed/acceleration of the carriage 6 around the vertical axle A.

Now referring to figure 3, a method 20 to determine a speed profile for fast traveling along the guide means 2 at high comfort and sufficient safety conditions comprises in a first step 21 calculating a correlation between applied torque and resulting rotational acceleration for the first drive 12 with the specific person carried on the carriage 6. In an alternative second step 22 measuring the specific persons weight while the specific person is carried on the carriage 6. With the measured value, a specific mass moment of inertia is determined for the specific person in a third step 23. Either the specific mass moment of inertia is calculated from the value received from the first step 21 or the specific mass moment of inertia is estimated with the value received from the second step 22. In a fourth step 24, an optimal torque is set according to the specific mass moment of inertia received from the third step 23. This optimal torque may be set according to generally defined comfort conditions to avoid too fast or too slow rotation of the carriage 6, may be set to comfort conditions individually defined by the specific person and/or may be defined by regulations. Finally, in a fifth step 25, the speed profile is determined applying at the most the optimal torque with the first drive 12. Thus, the speed profile can be optimized for fast travelling with the optimal torque set.

Figure 4 shows an speed profile 30 with the position of the carriage 6 along the guide means 2 on the x-axis and the translational speed of the carriage 6 along the guide means 2 and the rotational angle phi on the y-axis. A first graph 31 represents translational speed values of the carriage 6 along the guide means 2 and a second graph 32 represents values of the rotational angle phi. At a position 33 of the guide means 2, a specific angle phi has to be reached, e.g. for a turn of the guide means 2 beginning at this position. Therefore the carriage 6 starts to rotate at position 34 at a certain torque of the first drive 12. The angle phi is then kept constant after the position 33, e.g. as long as the carriage 6 is in the turn. Afterwards, a counter wise rotation of the carriage 6 is conducted, e.g. to rotate the carriage 6 to an angle phi required at a landing position. The speed at the same time is kept at an optimal most of the time, while being reduced during the turn, e.g. to allow the angle phi at position 33 to be reached and/or to increase comfort in the turn.

### Reference list

- 1: stairlift
- 2: guide means
- 2.1: positive engagement means of the guide means
- 3: staircase
- 3.1: step of the staircase
- 6: carriage
- 7: drive unit of the carriage
- 8: chair of the carriage
- 8.1: arm rest of the chair
- 8.2: footrest of the chair
- 9: leveling mechanism
- 11: user interaction means
- 12: first drive
- 13: control unit
- 14: stairwell
- 15.1: wall of the stairwell
- 15.2: wall of the stairwell
- 15.3: wall of the stairwell
- 15.4: wall of the stairwell
- 20: method to determine a speed profile
- 21: first step - calculate a correlation between applied torque and resulting rotational acceleration for the first drive
- 22: second step - measure the specific persons weight
- 23: third step - determine a specific mass moment of inertia
- 24: fourth step - set an optimal torque according to the specific mass moment of inertia
- 25: fifth step - determine the speed profile applying at the most the optimal torque with the first drive
- 30: speed profile
- 31: first graph
- 32: second graph
- 33: position
- 34: position
- A: vertical axle
- D: direction of the guide means
- phi: angle of rotation of the carriage around the vertical axle

## Claims

1. A method (20) to determine a speed profile (30) for a stairlift (1) for transporting a person along a staircase (3), wherein the stairlift (1) comprises
guide means (2) extending along the staircase (3);
a carriage (6) being moveable along the guide means (2) and configured to carry a person; and
user interaction means (11) for operating the stairlift (1);
wherein the carriage (6) is rotatable around a vertical axle (A) by a first drive (12);
wherein the method comprises the steps of:
determining (23) a specific mass moment of inertia for a specific person by calculating (21) a correlation between applied torque and resulting rotational acceleration for the first drive (12) with the specific person carried on the carriage (6) or by measuring (22) the specific person's weight while the specific person is carried on the carriage (6);
setting (24) an optimal torque according to the specific mass moment of inertia; and
determining (25) the speed profile (30) applying at the most the optimal torque with the first drive (12).

2. Method (20) according to claim 1, wherein the correlation between applied torque and resulting rotational acceleration is calculated in a test rotation.

3. Method (20) according to claim 2, wherein the test rotation is conducted once during installation of the stairlift (1).

4. Method (20) according to claim 2, wherein the test rotation is conducted before a ride, in particular before every ride of the stairlift (1).

5. Method (20) according to any one of claims 2 to 4, wherein the test rotation is conducted in a landing position of the carriage (6).

6. Method (20) according to any of the preceding claims, wherein the speed profile (30) is determined applying not more than an optimal rotational speed for the first drive (12).

7. Method (20) according to any of the preceding claims, wherein the speed profile (30) is determined with information on a trajectory of the guide means (2).

8. Method (20) according to claim 7, wherein the trajectory comprises at least one change of direction around a vertical axle and/or at least one change of direction around a horizontal axle.

9. Method (20) according to any of the preceding claims, wherein the speed profile (30) is determined with information on a necessary angle of rotation (phi) around the vertical axle (A) at at least one position of the carriage (6) along the guide means (2).

10. Method (20) according to claim 9, wherein a necessary angle of rotation (phi) is set by rotating the carriage (6) manually for at least one position of the carriage (6) along the guide means (2), in particular during a test run of the carriage (6) along the guide means (2).

11. Method (20) according to any of the preceding claims, wherein the stairlift (1) further comprises a leveling mechanism (9) for keeping the carriage (6) in a horizontal orientation, and wherein the speed profile (30) is determined with information on an angle of the leveling mechanism (9) at at least one position of the carriage (6) along the guide means (2).

12. Method (20) according to claim 11, wherein the angle of the leveling mechanism (9) is set for at least one position of the carriage (6) along the guide means (2) during a test run of the carriage (6) along the guide means (2).

13. Method (20) according to any of the preceding claims, wherein the speed profile (30) is optimized for shortest travel time.

14. A stairlift (1) for transporting a person along a staircase (3), comprising guide means (2) extending along the staircase (3);
a carriage (6) being moveable along the guide means (2) and configured to carry a person;
a control unit (13); and
user interaction means (11) for operating the stairlift (1);
wherein the carriage (6) is rotatable around a vertical axle (A) by a first drive (12);
**characterized in that** the stairlift (1) comprises means to calculate a correlation between applied torque and resulting rotational acceleration for the first drive (12) and/or a weight sensor to measure the specific person's weight while the specific person is carried on the carriage (6) in order that the control unit (13) implements the method according to any of claims 1 to 13.

15. Stairlift (1) according to claim 14, further comprising a leveling mechanism (9) for keeping the carriage (6) in a horizontal orientation along the guide means (2).

## Patentansprüche

1. Verfahren (20) zum Bestimmen eines Geschwindigkeitsprofils (30) für einen Treppenlift (1) zum Transportieren einer Person entlang einer Treppe (3), wobei der Treppenlift (1) aufweist:
Führungsmittel (2), die sich entlang der Treppe (3) erstrecken;
eine Beförderungsvorrichtung (6), die entlang der Führungsmittel (2) bewegbar ist und dazu eingerichtet ist, eine Person zu befördern; und
Benutzerinteraktionsmittel (11) zum Bedienen des Treppenlifts (1);
wobei die Beförderungsvorrichtung (6) durch einen ersten Antrieb (12) um eine vertikale Achse (A) drehbar ist;
wobei das Verfahren die Schritte umfasst:
Bestimmen (23) eines konkreten Massenträgheitsmoments für eine konkrete Person durch Berechnen (21) einer Korrelation zwischen ausgeübtem Drehmoment und resultierender Drehbeschleunigung für den ersten Antrieb (12), während die konkrete Person auf der Beförderungsvorrichtung (6) getragen wird, oder durch Messen (22) des Gewichts der konkreten Person, während die konkrete Person auf der Beförderungsvorrichtung (6) getragen wird;
Einstellen (24) eines optimalen Drehmoments entsprechend dem konkreten Massenträgheitsmoment; und
Bestimmen (25) des Geschwindigkeitsprofils (30) unter Ausübung höchstens des optimalen Drehmoments durch den ersten Antrieb (12).

2. Verfahren (20) nach Anspruch 1, wobei die Korrelation zwischen ausgeübtem Drehmoment und resultierender Drehbeschleunigung bei einer Testdrehung berechnet wird.

3. Verfahren (20) nach Anspruch 2, wobei die Testdrehung einmalig während des Einbaus des Treppenlifts (1) durchgeführt wird.

4. Verfahren (20) nach Anspruch 2, wobei die Testdrehung vor einer Fahrt durchgeführt wird, insbesondere vor jeder Fahrt des Treppenlifts (1).

5. Verfahren (20) nach einem der Ansprüche 2 bis 4, wobei die Testdrehung an einer Landungsposition der Beförderungsvorrichtung (6) durchgeführt wird.

6. Verfahren (20) nach einem der vorhergehenden Ansprüche, wobei das Geschwindigkeitsprofil (30) unter Anwendung höchstens einer optimalen Drehgeschwindigkeit für den ersten Antrieb (12) bestimmt wird.

7. Verfahren (20) nach einem der vorhergehenden Ansprüche, wobei das Geschwindigkeitsprofil (30) mit Informationen über eine Trajektorie der Führungsmittel (2) bestimmt wird.

8. Verfahren (20) nach Anspruch 7, wobei die Trajektorie mindestens eine Richtungsänderung um eine vertikale Achse und/oder mindestens eine Richtungsänderung um eine horizontale Achse umfasst.

9. Verfahren (20) nach einem der vorhergehenden Ansprüche, wobei das Geschwindigkeitsprofil (30) mit Informationen über einen notwendigen Drehwinkel (phi) um die vertikale Achse (A) an mindestens einer Position der Beförderungsvorrichtung (6) entlang der Führungsmittel (2) bestimmt wird.

10. Verfahren (20) nach Anspruch 9, wobei ein notwendiger Drehwinkel (phi) durch manuelles Drehen der Beförderungsvorrichtung (6) für mindestens eine Position der Beförderungsvorrichtung (6) entlang der Führungsmittel (2) eingestellt wird, insbesondere während eines Testlaufs der Beförderungsvorrichtung (6) entlang der Führungsmittel (2).

11. Verfahren (20) nach einem der vorhergehenden Ansprüche, wobei der Treppenlift (1) ferner einen Nivellierungsmechanismus (9) zum Halten der Beförderungsvorrichtung (6) in einer horizontalen Ausrichtung aufweist und wobei das Geschwindigkeitsprofil (30) mit Informationen über einen Winkel des Nivellierungsmechanismus (9) an mindestens einer Position der Beförderungsvorrichtung (6) entlang der Führungsmittel (2) bestimmt wird.

12. Verfahren (20) nach Anspruch 11, wobei der Winkel des Nivellierungsmechanismus (9) für mindestens eine Position der Beförderungsvorrichtung (6) entlang der Führungsmittel (2) während eines Testlaufs der Beförderungsvorrichtung (6) entlang der Führungsmittel (2) eingestellt wird.

13. Verfahren (20) nach einem der vorhergehenden Ansprüche, wobei das Geschwindigkeitsprofil (30) auf die kürzeste Fahrzeit optimiert ist.

14. Treppenlift (1) zum Transportieren einer Person entlang einer Treppe (3), aufweisend:
Führungsmittel (2), die sich entlang der Treppe (3) erstrecken;
eine Beförderungsvorrichtung (6), die entlang der Führungsmittel (2) bewegbar ist und dazu eingerichtet ist, eine Person zu befördern;
eine Steuereinheit (13); und
Benutzerinteraktionsmittel (11) zum Bedienen des Treppenlifts (1);
wobei die Beförderungsvorrichtung (6) durch einen ersten Antrieb (12) um eine vertikale Achse (A) drehbar ist;
**dadurch gekennzeichnet, dass** der Treppenlift (1) Mittel zur Berechnung einer Korrelation zwischen ausgeübtem Drehmoment und resultierender Drehbeschleunigung für den ersten Antrieb (12) und/oder einen Gewichtssensor zum Messen des Gewichts der konkreten Person, während die konkrete Person auf der Beförderungsvorrichtung (6) getragen wird, aufweist, damit die Steuereinheit (13) das Verfahren nach einem der Ansprüche 1 bis 13 implementiert.

15. Treppenlift (1) nach Anspruch 14, ferner aufweisend einen Nivellierungsmechanismus (9) zum Halten der Beförderungsvorrichtung (6) in einer horizontalen Ausrichtung entlang der Führungsmittel (2).

## Revendications

1. Procédé (20) pour déterminer un profil de vitesse (30) pour un monte-escalier (1) destiné au transport d'une personne le long d'un escalier (3), dans lequel le monte-escalier (1) comprend
des moyens de guidage (2) s'étendant le long de l'escalier (3);
un chariot (6) pouvant être déplacé le long des moyens de guidage (2) et configuré pour transporter une personne; et
des moyens d'interaction avec l'utilisateur (11) pour faire fonctionner le monte-escalier (1);
dans lequel le chariot (6) peut tourner autour d'un axe vertical (A) grâce à un premier entraînement (12) ;
dans lequel le procédé comprend les étapes suivantes:
déterminer (23) un moment d'inertie de masse spécifique pour une personne spécifique en calculant (21) une corrélation entre le couple appliqué et l'accélération de rotation résultante pour le premier entraînement (12) avec la personne spécifique transportée sur le chariot (6) ou en mesurant (22) le poids de la personne spécifique lorsque que la personne spécifique est transportée sur le chariot (6) ;
régler (24) un couple optimal en fonction du moment d'inertie de masse spécifique; et
déterminer (25) le profil de vitesse (30) en appliquant au maximum le couple optimal avec le premier entraînement (12).

2. Procédé (20) selon la revendication 1, dans lequel la corrélation entre le couple appliqué et l'accélération de rotation résultante est calculée dans une rotation d'essai.

3. Procédé (20) selon la revendication 2, dans lequel la rotation d'essai est effectuée une fois lors de l'installation du monte-escalier (1).

4. Procédé (20) selon la revendication 2, dans lequel la rotation d'essai est effectuée avant un déplacement, en particulier avant chaque déplacement du monte-escalier (1).

5. Procédé (20) selon l'une quelconque des revendications 2 à 4, dans lequel la rotation d'essai est effectuée en position d'atterrissage du chariot (6).

6. Procédé (20) selon l'une quelconque des revendications précédentes, dans lequel le profil de vitesse (30) est déterminé en appliquant au plus une vitesse de rotation optimale pour le premier entraînement (12).

7. Procédé (20) selon l'une quelconque des revendications précédentes, dans lequel le profil de vitesse (30) est déterminé à partir d'informations sur une trajectoire des moyens de guidage (2).

8. Procédé (20) selon la revendication 7, dans lequel la trajectoire comprend au moins un changement de direction autour d'un axe vertical et/ou au moins un changement de direction autour d'un axe horizontal.

9. Procédé (20) selon l'une quelconque des revendications précédentes, dans lequel le profil de vitesse (30) est déterminé à partir d'informations sur un angle de rotation nécessaire (phi) autour de l'axe vertical (A) à au moins une position du chariot (6) le long des moyens de guidage (2).

10. Procédé (20) selon la revendication 9, dans lequel un angle de rotation nécessaire (phi) est réglé en faisant tourner manuellement le chariot (6) pour au moins une position du chariot (6) le long des moyens de guidage (2), en particulier lors d'un essai de fonctionnement du chariot (6) le long des moyens de guidage (2).

11. Procédé (20) selon l'une quelconque des revendications précédentes, dans lequel le monte-escalier (1) comprend en outre un mécanisme de mise à niveau (9) pour maintenir le chariot (6) dans une orientation horizontale, et dans lequel le profil de vitesse (30) est déterminé à partir d'informations sur un angle du mécanisme de mise à niveau (9) à au moins une position du chariot (6) le long des moyens de guidage (2).

12. Procédé (20) selon la revendication 11, dans lequel l'angle du mécanisme de mise à niveau (9) est réglé pour au moins une position du chariot (6) le long des moyens de guidage (2) pendant un essai de fonctionnement du chariot (6) le long des moyens de guidage (2).

13. Procédé (20) selon l'une quelconque des revendications précédentes, dans lequel le profil de vitesse (30) est optimisé pour le temps de déplacement le plus court.

14. Monte-escalier (1) pour le transport d'une personne le long d'un escalier (3), comprenant
des moyens de guidage (2) s'étendant le long de l'escalier (3);
un chariot (6) pouvant être déplacé le long des moyens de guidage (2) et configuré pour transporter une personne;
une unité de commande (13); et
des moyens d'interaction avec l'utilisateur (11) pour faire fonctionner le monte-escalier (1);
dans lequel le chariot (6) peut tourner autour d'un axe vertical (A) grâce à un premier entraînement (12);
**caractérisé en ce que** le monte-escalier (1) comprend des moyens pour calculer une corrélation entre le couple appliqué et l'accélération de rotation résultante pour le premier entraînement (12) et/ou un capteur de poids pour mesurer le poids de la personne spécifique lorsque la personne spécifique est transportée sur le chariot (6) afin que l'unité de commande (13) mette en œuvre le procédé selon l'une quelconque des revendications 1 à 13.

15. Monte-escalier (1) selon la revendication 14, comprenant en outre un mécanisme de mise à niveau (9) pour maintenir le chariot (6) dans une orientation horizontale le long des moyens de guidage (2).
